Europäisches Patentamt

European Patent Office

Office européen des brevets

(19)

(11) Publication number: **0 334 415**
**A1**

(12) **EUROPEAN PATENT APPLICATION**

(21) Application number: **89200532.3**

(22) Date of filing: **02.03.89**

(51) Int. Cl.⁴: **C04B 35/56** , //C04B41/85

(30) Priority: **24.03.88 IT 1991988**

(43) Date of publication of application:
**27.09.89 Bulletin 89/39**

(84) Designated Contracting States:
**AT BE CH DE ES FR GB GR LI LU NL SE**

(71) Applicant: **ENIRICERCHE S.p.A.**
**Corso Venezia 16**
**I-20121 Milan(IT)**

(72) Inventor: **Di Rese, Leonardo**
**Via Verbania 16**
**I-00182 Rome(IT)**
Inventor: **Guicciardi, Stefano**
**Via G.Di Vittorio 1**
**I-60019 Senigallia Ancona(IT)**
Inventor: **Petrucci, Ferruccio**
**Via Americo Patrizi 25**
**I-05100 Terni(IT)**
Inventor: **Scafe, Ernesto**
**Via Zanardi 22 Int.13**
**I-00155 Rome(IT)**

(74) Representative: **Roggero, Sergio et al**
**Ing. Barzanò & Zanardo Milano S.p.A. Via**
**Borgonuovo 10**
**I-20121 Milano(IT)**

(54) **Improved process for the production of ceramic components.**

(57) Ceramic components formed by silicon carbide/silicon metal are prepared by means of a process in which the infiltration of liquid silicon and its solidification in a porous body containing carbonaceous material are so controlled as to prevent the defects from occurring, which derive from the change in specific volume taking place during the phase change of the same silicon.

The so obtained ceramic components are very compact, with defects of very small size, and display high values of flexural strength.

EP 0 334 415 A1

## IMPROVED PROCESS FOR THE PRODUCTION OF CERAMIC COMPONENTS

The present invention relates to an improved process for the production of ceramic components formed by silicon carbide/silicon metal.

The ceramic components formed by silicon carbide/silicon metal are prepared according to a process known in the art, which comprises: mixing powders of silicon carbide and carbonaceous material, with the possible addition of organic binders; the formation of a porous body by shaping the mixture by extrusion, moulding, and the like; and the infiltration of liquid silicon, which, by diffusing inside the porous body through the residual porosities, reacts with carbon forming silicon carbide, which binds the grains of the pre-existing silicon carbide powder. The excess silicon furthermore fills the residual pores, thus forming a homogeneous, pore-free body. The various processes known in the art are different as regards the characteristics of the raw materials used, the forming technique, and the infiltration technique. For better information on this technique known in the art, reference is made to the description of "Special Ceramics", vol. 5, 1971, pages 99-124, and to the disclosures of U.S. patents 4,385,020 and 4,148,894.

It is known that in the ceramic materials the strength is correlated to the size of the defects, which for the above cited materials is normally evaluated to be of $\mu 50$ m. For the silicon carbide/silicon metal components, the range of values of flexural strength, evaluated on 4 points according to "Property Screening and Evaluation of Ceramic Turbine Materials" Report AFWAL - TR - 83-4141, 1984, is usually of about 200-400 MPa. In the best cases, the flexural strength can reach values of the order of 500-520 MPa (measured on three points) for silicon carbide/silicon metal components with percentages of free silicon of the order of 10% and with a high degree of finishing of the surfaces submitted to the tensile strength, as reported by P. Kennedy "Effect of Microstructural Features on the Mechanical Properties of REFEL Self-bonded Silicon Carbide" in "Non-Oxide Technical and Engineering Ceramics", edited by Stuart Hampshire Elsevier Applied Science (1986).

However, such values of strength are not fully satisfactory for some types of applications, and the preparation of ceramic components endowed with furthermore improved characteristics is the purpose of the present invention.

In particular, the present Applicant found, according to the instant invention, that ceramic components of silicon carbide/silicon metal which are unexpectedly very compact, with defects of very limited size (of the order of $20\mu m$), and are therefore endowed with very high values of flexural strength, can be obtained by means of a process in which the operations of infiltration and solidification are carried out under controlled conditions, which make it possible the defects do be avoided, which are caused by the changes in specific volume during the silicon phase change.

In accordance with the above, the present invention relates to a process for the preparation of ceramic components of silicon carbide / silicon metal, endowed with improved values of flexural strength, which comprises the following steps, in sequence:

a) mixing of:

100 parts by weight of a carbonaceous material ground down to particles - with an average size smaller than 10 $\mu$m, and with a geometrical density lower than 1.6 g/cc;

from 0 to 250 parts by weight of a silicon powder with an average size of the particles lower than 25 m; and from 1 to 10% by weight of water, computed relatively to the total weight of the mixture;

b) cold-forming of the mixture obtained in the (a) step, to a geometric density of the resulting porous body comprised within the range of from 0.9 to 1.9 g/cc;

c) cold-forming of a porous body of silicon powder, with an average size of the particles lower than 300 $\mu$m, using an amount of silicon which, added to the amount possibly added in the (a) step, is comprised within the range of from 270 to 400 parts by weight per each 100 parts by weight of the carbonaceous material present in the porous body of the (b) step;

d) heating of the porous bodies from the (b) and (c) steps, with the porous body from the (c) step being overlapped to the porous body from the (b) step, carried out in a furnace under a pressure comprised within the range of from $10^{-3}$ to 100 Pa, and at a temperature comprised within the range of from 1,410° to 1,800°C, so as to cause the liquid silicon to infiltrate, and the carbonaceous material to be converted to a complete, or substantially complete extent, into silicon carbide;

e) cooling of the product from the (d) step, carried out at a cooling speed lower than 10°C/minute, and maintaining the components at a temperature gradient comprised within the range of from 0.1 to 100°C/cm, and the end recovery of the ceramic component.

In the preferred form of practical embodiment of the present invention, in the (a) step of the process, as the carbonaceous material, a rayon fibre from graphitized cellulose ground down to a particle size equal to, or smaller than, 5μm, is used. Furthermore, in said (a) step silicon metal ground down to a particle size equal to, or smaller than, 5μm, is preferably used. Silicon carbide can be contained in the mixture prepared in the (a) step, however in the preferred form of embodiment, such a mixture will not contain silicon carbide. Furthermore, in the mixture of the (a) step an organic binder can be introduced, but in the preferred form of practical embodiment, such a binder will be absent.

According to a typicl form of practical embodiment of the present invention, in the (a) step 100 parts by weight of carbonaceous material is mixed with from 5 to 100 parts by weight of silicon metal, the amount of water being maintained within the range of values of from 1 to 10% by weight, relatively to the total weight of the mixture.

The formation of the porous bodies in the (b) and (c) steps can take place by means of the usual techniques of directional or isostatic moulding, extrusion, injection-moulding, casting inside moulds, and the like.

The (d) process step is preferably carried out at temperatures comprised within the range of from 1,450° to 1,550°C. Advantageously, the porous bodies will be positioned on substrates, e.g., quartz substrates, provided with release agents, such as boron nitride, so as to prevent the ceramic components from being bonded to the substrate.

In the (e) step, the process is preferably carried out with a cooling speed of from 0.05 to 2°C/minute, with a temperature gradient comprised within the range of from 5 to 50°C/cm, until the solidification of the infiltrating phase is obtained.

With the temperature gradient applied in the cooling step, the solidification of silicon metal can be guided along the direction defined by the temperature gradient, and the effect is obtained, that the last portion of silicon to solidify remains outside the ceramic component, and therefore the consequent change in volume can take place without endangering the strength of the same component.

Once that the solidification of the infiltrating phase is ended, the cooling speed can be considerably increased, compatibly with the resistance of the material to the thermal shock.

When the (d) and (e) process steps are carried out, "zone" furnaces (of the Bridgman type, with two or more zones), "tunnel" furnaces, or induction furnaces, as well as graphite-resistor furnaces can be used.

According to a form of practical embodiment, the temperature gradient is applied in the (d) heating step, and is maintained during the (e) cooling step. The temperature gradient can be applied by suitably positioning the one or more heating means in the furnace, and/or by withdrawing the sample from the hot furnace chamber at a controlled speed. The ceramic components, obtained with the process according to the present invention, can be submitted to such finishing operations as sand-blasting, polishing, grinding with diamond tools, and the like.

Said ceramic components show a content of silicon carbide comprised within the range of from about 50 to about 90% by volume, and are very close to the theoretical density (about 99% of the theoretical density), with defects of very small size (of the order of 20 μm), amd with values of 3-point flexural strength of 650 MPa, when this characteristic is measured on specimens of 4 x 4 x 40 mm, and with a distance between the support points of 34 mm.

The following experimental examples are reported in order to better explain the invention.

### Example 1

Waste silicon from electronic industry is used, broken and ground until a powder with an average particle diameter of 5μm, and a surface area (BET) of about 1 m²/g (evaluated by means of the standard BET method with nitrogen) is obtained.

Furthermore, a carbon is used, which is prepared by grinding graphitized, high-porosity fibres of RUG 4000 type by Le Carbone Lorraine, obtained from cellulose, and having cross surface areas comprised within the range of from 8 to 12μm, a surface area (BET) comprised within the range of from 100 to 150m²/g, and a geometrical density lower than 1.6 g/cc. After grinding, powders are obtained, which have average particle sizes of the order of 5μm, and with a surface area (BET) close to 300 m²/g.

50 parts by weight of silicon, 100 parts by weight of carbon and 15 parts by weight of water are mixed together. The mixture is then directionally moulded according to the customary technique, and is placed on a quartz substrate coated with silicon nitride in order to prevent quartz-silicon from welding to each other.

Above the so-prepared porous body, a porous body of silicon is placed, which contains the necessary silicon for the following operations: transformation of the excess of carbon into silicon carbide (stoichiometric ratio of silicon to carbon = 2.33); pore filling; and substrate "wetting".

The whole is placed inside a vacuum furnace (0.1 Pascal), with the hot zone being formed by two graphite resistors, with a vertical gradient of 10°C/cm, a maximum temperature of 1,550°C and a minimum temperature of 1,450°C.

The maximum temperature is reached with a temperature increase of 10°/minute, and then, after a stay of 15 minutes, the maximum temperature is increased from 1,550°C to 1,400°C, with a temperature decrease rate of 0.8°C/minute.

The cooling speed is then increased to 5°C/minute, until the temperature of 600°C is reached (at which temperature, the ductile-fragile transition of silicon takes place, as reported by Runyan in Silicon Technology, Mc. Graw-Hill, 1965, page 222).

The so-obtained ceramic component has a density of 2.94 g/cc, with a silicon carbide concentration of 70% by volume. The flexural strength on three points measured on specimens of 4 x 4 x 40 mm of size, with the surface submitted to the tensile strength being polished with diamond pastes of size decreasing down to 9μm and on support points at a distance of 34 mm results to be of 625 ±60 MPa (average value on 8 specimens).

## Example 2

One hundred parts by weight of carbon powder, 5 parts by weight of silicon powder and 10 parts by weight of water are mixed together. The carbon powders and the silicon powders are the same as of Example 1. The so-obtained mixture is moulded by directional moulding, according to the traditional technique, by using a slab-shaped mould, with dimensions of 10 x 10 x 40 mm.

To the so-shaped porous body, another green body, of silicon only, is overlapped, which weights about 12.5 g, with said silicon amount being excessive relatively to the required amount for the complete conversion of carbon into silicon carbide, and for filling the residual porosity.

The whole, deposited on a quartz substrate coated with silicon nitride, is charged to a vacuum furnace (10 Pascal) of Bridgman type.

The hot zone of the furnace is heated to 1,500°C, at a heating speed of 15°C/minute. After a stay of 15 minutes, the specimens are withdrawn from the hot chamber at a speed of 2 cm/hour. When the specimens are inside the cold chamber (temperature lower than 900°C), the withdrawal speed is increased up to 10 cm/hour for two hours, and the hot zone is then cooled at a cooling speed of 20°C/minute.

The so obtained ceramic component has density values. measured by means of the hydrostatic balance, of round 3.12 g/cc, and a concentration of silicon carbide close to 90% by volume.

The specimens, finished as described in Example 1, show a flexural strength of 670 ±70 MPa (average value on three specimens).

## Claims

1. Process for the preparation of ceramic components of silicon carbide / silicon metal, endowed with improved values of flexural strength, characterized in that it comprises the following steps, in sequence:

a) mixing of:
100 parts by weight of a carbonaceous material ground down to particles with an average size smaller than 10 μm, and with a geometrical density lower than 1.6 g/cc;
from 0 to 250 parts by weight of a silicon powder with an average size of the particles lower than 25 μm; and from 1 to 10% by weight of water, computed relatively to the total weight of the mixture;

b) cold-forming of the mixture obtained in the (a) step, to a geometric density of the resulting porous body comprised within the range of from 0.9 to 1.9 g/cc;

c) cold-forming of a porous body of silicon powder, with an average size of the particles lower than 300 μm, using an amount of silicon which, added to the amount possibly added in the (a) step, is comprised within the range of from 270 to 400 parts by weight per each 100 parts by weight of the carbonaceous material present in the green body of the (b) step;

d) heating of the porous bodies from the (b) and (c) steps, with the porous body from the (c) step being overlapped to the porous body from the (b) step, carried out in a furnace under a pressure comprised within the range of from $10^{-3}$ to 100 Pa, and at a temperature comprised within the range of from 1.4100° to 1,800°C, so as to cause the liquid silicon to infiltrate, and the carbonaceous material to be converted to a complete, or substantially complete extent, into silicon carbide;

e) cooling of the product from the (d) step, carried out at a cooling speed lower than 10°C per minute, and maintaining the components at a temperature gradient comprised within the range of from 0.1 to 100°C/cm, and the end recovery of the ceramic component.

2. Process according to claim 1, characterized in that in the (a) step of the process, as the carbonaceous material, a rayon fibre from graphitized cellulose ground down to a particle size equal to, or smaller than, 5 μm, is used; and, furthermore, silicon metal ground down to a particle size equal to, or smaller than, 5 μm, is used.

3. Process according to claim 1, characterized in that in the (a) step 100 parts by weight of carbonaceous material is mixed with from 5 to 100 parts by weight of silicon metal, the amount of water being maintained within the range of values of from 1 to 10% by weight, relatively to the total weight of the mixture.

4. Process according to claim 1, characterized in that in the (d) step the process is carried out at temperatures comprised within the range of from 1,450 to 1,550°C.

5. Process according to claim 1, characterized in that in the (e) step, the process is preferably carried out with a cooling speed of from 0.05 to 2°C/minute, with a temperature gradient comprised within the range of from 5 to 50°C/cm.

6. Process according to claim 1, characterized in that said temperature gradient is applied in the (d) heating step, and is maintained during the (e) cooling step.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y,D | US-A-4 385 020 (C.R. MORELOCK) * Claims 1-3; column 2, lines 20-59; column 4, lines 6-22 * | 1-4 | C 04 B 35/56 // C 04 B 41/85 |
| A | | 5,6 | |
| Y | DE-A-1 671 092 (SCHNEIDER & CO.) * Claims 1,3; page 8, paragraph 4 - page 9, paragraph 1 * | 1-4 | |
| A | | 5,6 | |
| A | DE-A-2 910 628 (COORS PORCELAIN CO.) * Claims 1-5 * | 1-6 | |

TECHNICAL FIELDS SEARCHED (Int. Cl.4)

C 04 B

The present search report has been drawn up for all claims

| Place of search | Date of completion of the search | Examiner |
|---|---|---|
| THE HAGUE | 27-06-1989 | LUETHE H. |